# EUROPEAN PATENT APPLICATION

(11) **EP 4 826 940 A1**
(43) Date of publication of application: **21.10.2026**
(21) Application number: 25171434.1
(22) Date of filing: 17.04.2025
(51) Int. Cl.: H02J 3/12

(54) **CONTROLLING OF AN ELECTROLYZING PLANT**

(71) Applicant: Siemens Energy Global GmbH & Co. KG, 81739 München (DE)
(72) Inventor: Lukianov, Semen, 91058 Erlangen (DE); Kwon, Yongdae, 90763 Fürth (DE); Runser, Thibaut, 90478 Nürnberg (DE); Craciun, Bogdan, 91052 Erlangen (DE)

(57) **Abstract**

The invention relates to a method of controlling an electrolyzing plant (10) having plural electrolyzing cells (14) providing an electrolyzing process in response to being subjected to a DC electrolyzing power, wherein the electrolyzing plant is supplied with electric power from an electric power network (12) deploying an alternating voltage, wherein a transformer (32) has a primary winding (38) connected with the electric power network, wherein the primary winding (38) has several taps (30), and a secondary winding (40) connected with an AC side (22) of an electric converter (20), and a DC side (24) of the electric converter (20) provides the DC electrolyzing power, wherein an on-Ioad-tap-changer (28) is connected with the taps, wherein a control apparatus (36) controls the on-Ioad-tap-changer. The on-Ioad-tap-changer (28) has switching apparatuses (S1, S2, S3, S4, S5, S6) for the taps, wherein each of the switching apparatuses comprise at least one solid-state switching element.

## Description

The invention relates to a method of controlling an electrolyzing plant having plural electrolyzing cells, especially configured to electrolyze water by providing an electrolyzing process, wherein the electrolyzing cells perform the electrolyzing process in response to being subjected to a DC electrolyzing power, wherein the electrolyzing plant is supplied with electric power received via a point of connection of the electrolyzing plant connected with an electric power network, wherein the electric power network deploys an alternating voltage for providing the electric power, wherein a primary winding of a transformer of the electrolyzing plant is connected with the point of connection, in order to be subjected to the alternating voltage, wherein a secondary winding of the transformer provides an alternating secondary voltage, wherein an AC side of at least one electric converter of the electrolyzing plant is electrically connected with the secondary winding in order to receive the electric power, and a DC side of at least one electric converter provides the DC electrolyzing power in response to the AC side receiving the electric power, wherein the primary winding has at least two taps connected with an on-load-tap-changer of the transformer, wherein a voltage sensor of the electrolyzing plant senses a value of the alternating voltage at the point of connection, wherein the voltage sensor provides a voltage signal in response to sensing and submits the voltage signal to a control apparatus of the electrolyzing plant, wherein the control apparatus compares the voltage signal with at least one predetermined reference value and controls the on-load-tap-changer dependent on comparing. The invention further relates to an electrolyzing plant having plural electrolyzing cells, especially configured to electrolyze water by providing an electrolyzing process, wherein the electrolyzing cells perform the electrolyzing process in response to being subjected to a DC electrolyzing power, a point of connection configured to be connected with an electric power network, wherein the electric power network deploys an alternating voltage for providing the electric power, in order to supply the electrolyzing plant with electric power received via a point of connection, a transformer having a primary winding connected with the point of connection, in order to be subjected to the alternating voltage, wherein the primary winding has at least two taps, and a secondary winding providing an alternating secondary voltage, at least one electric converter having an AC side connected with the secondary winding in order to receive the electric power, and a DC side providing the DC electrolyzing power in response to the AC side receiving the electric power, an on-load-tap-changer connected with the at least two taps, voltage sensor configured to sense a value of the alternating voltage at the point of connection, wherein the voltage sensor is configured to provide a voltage signal in response to sensing, a control apparatus configured to compare the voltage signal submitted by the voltage sensor with at least one predetermined reference value and to control the on-load-tap-changer dependent on comparing.

Methods of controlling electrolyzing plants, for instance, for producing hydrogen and oxygen by electrolyzing of water in an electrolyzing process, and electrolyzing plants are well known in the state of the art, which is why specific references about the state of the art need not to be cited. The invention relates to objects providing an electrolyzing process, which are used, for example, for producing hydrogen and oxygen by electrolyzing of water or the like. The following considerations can be also applied to other such electrolyzing processes, respectively.

Electrolysis itself is provided by the plural electrolyzing cells. A group of the electrolyzing cells may be arranged such as to form an electrolyzing module. One or more electrolyzing modules may form an electrolyzing device. The electrolyzing plant may comprise one or more electrolyzing modules

The electrolyzing cells perform the electrolyzing process in response to being subjected to the DC electrolyzing power. The electrolyzing cells may be arranged at least partially as a stack. The DC electrolyzing power may be deployed by a DC electrolyzing voltage and a DC electrolyzing current. Especially, when the electrolyzing cells are arranged in one or more stacks, a specific stack may be subjected to the electrolyzing power. The electrolyzing cells may be electrically connected at least partially in series and/or in parallel. An electric connection of the electrolyzing cells may be provided such that at least some, or perhaps all, of the electrolyzing cells are subjected to a respective portion of a DC voltage or the DC electrolyzing voltage, respectively, subjected to the electrolyzing device. The operation of generic electrolyzing cells as well as the stack, for instance, for the use of electrolyzing of water, are well-known to those skilled in the art, such as, for instance, disclosed by DE 197 29 529 C1. The generic function of electrolysis, especially electrolysis of water, is also well known to those skilled in the art, which is why it is refrained from further detailed explanation in this specification.

During the electrolyzing process, when the electrolyzing cells are subjected to the suited DC electrolyzing power, especially the DC electrolyzing voltage, the electrolyzing cells respond with the DC electrolyzing current flow. Especially with regard to the electrolyzing of water, during the electrolyzing process, water is consumed, and hydrogen and oxygen are produced. A value of the DC electrolyzing voltage usually may depend on the number of electrolyzing cells being connected in series inside of the at least one stack. Generally, the electrolyzing cells of one stack are usually connected in series. Therefore, the DC current flow may depend on the applied DC voltage and the characteristics of the electrolyzing cells such as, for instance, electrical resistance, electrical impedance, aging and/or the like, of the series-connected electrolyzing cells. However, in some exemplary embodiments having a different design, the electrolyzing DC current flow may also depend on a number of electrolyzing cells being connected in parallel if applicable and/or a specific design of each of the electrolyzing cells.

Usually, the electrolyzing plant requires a respective high-power power supply during the electrolyzing process. For this purpose, the electrolyzing plant may have a point of connection (PoC), wherein, at the point of connection, the electrolyzing plant is electrically connected with the electric power network. It should be noted that the conditions for establishing the electrolyzing process by the electrolyzing cells of the electrolyzing plant are not easy to manage which is why it is usually an intention of an operator of the electrolyzing plant to maintain a specific processing condition and to avoid large amendments of this condition. Therefore, controlling the electrolyzing process of the electrolyzing cells in order to support stability of the electric power network should consider these requirements for supplying the electrolyzing plant with electric energy, on the one hand. Controlling can also be at least partially provided by a respective apparatus of the electrolyzing plant. On the other hand, network requirements of the electric power network also need to be considered, such as, for example, harmonics, power factor, low voltage condition, high voltage condition, frequency deviation, and/or the like.

The electrolyzing plant may have an internal power network, which is connected with the point of connection. Especially, the internal power network may receive electric energy from the electric power network and transmit the electric energy at least to the electrolyzing cells. In this regard, it should be noted that the electrolyzing plant, especially the internal power network, usually has at least one electric converter, for instance, a rectifying device, providing an electrical coupling between the point of connection, in turn connected with the electric power network, and the electrolyzing cells. The electrolyzing cells need to be supplied with DC voltage, whereas, usually, the electric power network provides an AC voltage, especially, a three-phase AC voltage. Therefore, the electrolyzing plant has at least one electric converter, which receives the AC voltage and, in response, provides the DC electrolyzing voltage, or DC electrolyzing power, respectively.

For the purpose of rectifying as such, the electric converter may be of the line-commutated type which may have switching elements such as, for example, thyristors, diodes and/or the like, or the electric converter may be of the self-commutated type which may have transistors as switching elements such as, for example, insulated gate bipolar transistors (IGBT), field effect transistors (FET) such as, for instance, metal oxide semiconductor field effect transistors (MOSFET), and/or the like, respectively. The switching elements can be controlled by a control apparatus of the electric converter, in order to adjust a specific electric power to be supplied to the electrolyzing cells. The control apparatus can be in communication with the apparatus for controlling the electrolyzing plant.

It should be further considered that the number of installed electrolyzing plants and existing electric power networks continuously increases. With regard to the global warming range, it is preferred to accelerate the production of green hydrogen. Simultaneously, the share of power electronic based units like renewable energy systems also increases leading to a decrease in grid stability. Consequently, electric power network operators or transmission system operators (TSO), respectively, consider defining requirements for the connection of large scale electrolyzing plants in an existing electric power network, in order to ensure a stable grid operation.

Usually, the electrolyzing plant requires a high power consumption, for instance, causing an AC current of the electric power network in a range of about single-digit kA through about low double-digit kA. The situation may become even more serious when considering a trend that most of the countries of the world are replacing existing conventional power plants by renewable energy sources, which further decreases a strength and a stability of the electric power network.

In this regard, connecting entities such as, for instance, large electrolysis plants or electrolyzing plants, respectively, to the electric power network deploying an alternating voltage for providing the electric power, for example, the public power grid, requires compliance of the entities with associated grid code requirements. An important grid code requirement, especially for large-scale plants, is their capability of staying connected during short periods of faulty electric network events, which means their fault ride through (FRT) capability, particularly during voltage dips, such as for example, unexpected periods of lower voltage. Especially, the entity shall have a low voltage ride through (LVRT) capability and/or a high voltage ride through (HVRT) capability. For the electric power network, it is important that the entity returns to a pre-fault power consumption in a short period of time after the fault is cleared or even during the fault in order to retain or quickly restore the balance between generated and consumed power in the electric power network. Power plants producing power are requested to resume the pre-fault power generation within a very short time, for instance, 1 second after the fault is cleared. Therefore, only a certain power is allowed to trip and it is essential for large-scale entities to remain electrically connected in case of a voltage dip and resume the pre-fault consumption levels within a specified time range.

Therefore, it should be noted that large flexible loads connected to the electric power network, or grid, respectively, in particular electrolyzing plants, may cause a substantial effect on the security and/or stability of the operation of the electric power network, especially, in case that the operation of the electrolyzing plant be not flexible with requirements regarding the operation of the electric power network. For example, during a power supply network fault caused by different reasons, the alternating voltage and/or its basic frequency may differ from a rated value. However, the electrolyzing plant shall stay connected and permanent disconnection shall be avoided. Additionally, grid stabilizing measures shall be performed by the electrolyzing plant.

Connecting large electrolyzing plants to the public grid may require compliance with the fulfillment of the respective grid code requirements. Part of these requirements - especially for large scale electrolyzing plants - is the support of the grid stability in case of a voltage event, especially an overvoltage event. Part of these requirements - especially for large-scale plants - is the High Voltage Ride-Through (HVRT) capability, which is applied to an electric power network with High Voltage (HV) or Ultra High Voltage (UHV) level. The typical core requirement is to remain fully connected to the grid in case of a temporary overvoltage at the point of connection (POC) with unchanged power consumption.

It is one of the main challenges for electrolyzing plants that occurs during HVRT event that a sudden increase of the voltage level appears at POC. In response, the voltage level on the DC side and therefore at the electrochemical cells increases as well. However, a small change in the DC electrolyzing voltage can lead to a dramatic change in DC electrolyzing current that flows into the system and therefore results in a respective gas production. This, in turn, can cause sufficient damage in the system and can cause shut down of the electrolyzing plant.

Usually, the electric power of the electric power network is provided at the point of connection, which is configured to be connected with an electric power network. The electric power network deploys an alternating voltage for providing the electric power, in order to supply the electrolyzing plant with electric power received via the point of connection. In order to improve the before-mentioned problems, the electrolyzing plant has a transformer having a primary winding connected with the point of connection so that the primary winding is subjected to the alternating voltage of the electric power network. The transformer has a secondary winding providing an alternating secondary voltage, wherein the at least one electric converter having an AC side connected with the secondary winding in order to receive the electric power.

The primary winding has at least two taps connected with an on-load-tap-changer (OLTC) of the transformer. Usually, the primary winding has more than only two taps. So, the on-load-tap-changer, which is controlled by a control apparatus of the electrolyzing plant, can be operated to adapt the primary winding dependent on a value of the alternating voltage at the point of connection. For this purpose, the on-load-tap-changer can be controlled to activate a respective tap of the primary winding so that a reliable energy supply can be achieved. As fas as value of the alternating voltage at the point of connection varies, it is possible by respective control of the on-load-tap-changer to at least partially compensate the variation by changing the tap to be used.

Conventional on-load-tap-changers may react in a time range of about 2.7s through 5 s, which is not sufficient for fast reaction on the system disturbances and for provision of required dynamics, especially with regard to the electric power network. Therefore, on-load-tap-changers are more commonly used for processes with low dynamics, for example, ramp-up or ramp-down of the electrolyzer load, or for compensation of the voltage fluctuations in supply network during steady state. It should be further noted that the HVRT cases may be critical for converters having switching elements based on insulated gate bipolar transistors (IGBT) due to the fact that IGBT-based converters are designed to operate usually with a high modulation index. In this case, an increase a value of the secondary alternating voltage at the AC side of the converter can lead to saturation problems, which in turn may cause operating the converter in diode conduction mode. In this modus, control of the operation of the converter may be lost, and may result in further increase of the DC electrolyzing power during HVRT. For such converters, which may have an overvoltage control, the increased DC electrolyzing power can last up to several seconds until this condition is removed at the POC or until the on-load-tap-changer adjusts its tap position. A similar problem can happen with thyristor-based converters, which usually have hard limits for operational firing angle.

Although IGBT-based converters may be improved to react more faster, this is not a cost-optimal solution as the indicated function might be used very seldom by the plant. The conventional on-load-tap-changer is not fast enough.

Therefore, it is an object of the invention to provide a method and an electrolyzing plant, which may further support stable and reliable operation of the electric power network.

As a solution, a method, and an electrolyzing plant according to the independent claims are proposed.

Further exemplary embodiments can be derived from the features of the dependent claims.

With regard to a generic method, it is especially proposed that, for each of the taps, the on-load-tap-changer has an individual switching apparatus, wherein each of the switching apparatuses is configured to connect exactly one of the taps with the point of connection depending on a switching status of the respective individual switching apparatus, wherein the switching statuses of the switching apparatuses are controlled dependent on comparing, wherein each of the switching apparatuses comprise at least one solid-state switching element.

With regard to a generic electrolyzing plant, it is especially proposed that, for each of the taps, the on-load-tap-changer has an individual switching apparatus, wherein each of the switching apparatuses is configured to connect exactly one of the taps with the point of connection depending on a switching status of the respective individual switching apparatus, wherein control apparatus is configured to control the switching statuses of the switching apparatuses dependent on comparing, wherein each of the switching apparatuses comprise at least one solid-state switching element.

Among others, the invention considers that the reaction of the electrolyzing plant upon voltage events of the electric power network can be enhanced if the reaction of the on-load-tap-changer can be substantially improved. A conventional on-load-tap-changer is based on mechanical elements, which need to be driven by electric motors. However, the on-load-tap-changer of the invention has a switching apparatus for each of the taps of the primary winding, which can be controlled by a respective control signal with regard to their switching statuses. Therefore, the mechanical elements as well as electric motors can be reduced. Usually, each of the switching apparatuses may provide a switched-off status and a switched-on status dependent on the respective control signal, which is a switching signal. The on-load-tap-changer has an individual switching apparatus for each of the taps. Therefore, dependent on the switching status of the switching apparatuses, the respective tap of the primary winding can be activated to be connected with the point of connection via the respective switching apparatus. Hence, controlling of the on-load-tap-changer allows not only adapting the primary winding with regard to the value of the alternating voltage at the point of connection, but it also allows a fast reaction in the switching process because the switching apparatuses comprise at least one solid-state switching element, and, moreover, it is possible to jump directly from a first activated tap to a second activated tap by skipping intermediate taps. In this regard a time range for switching between taps of about some 10 ms or less can be achieved.

The solid- state switching element can be a transistor, a thyristor, a combination thereof, combination including one or more diodes, and/or the like. Especially, the switching apparatuses may comprise at least two solid-state switching elements, which may be connected in an antiparallel manner. This may be applicable for thyristors forming the solid-state switching elements. However, it may be also possible to have two solid-state switching elements connected in series, wherein their current flow characteristics are contrary. These connections are especially applicable for switching apparatuses comprising transistors. Generally, these options may be used to switch alternating voltages and/or alternating currents, respectively. Especially, the series connection may be applicable for solid-state switching elements formed by transistors having a flyback diode.

Insofar, a respective individual switching apparatus is allocated to a respective individual tap of the primary winding. If a specific one of the switching apparatuses is switched to the switched-on status, the respective tap of the primary winding is coupled with the point of connection. Usually, only one of the switching apparatuses is maintained in the switched-on status, wherein the other switching apparatuses are maintained in the switched-off status. Only for the purpose of changing the activated tap, it may be possible for a predefined short period of time that the switching apparatus of the previous tap is still in the switched-on status, wherein the switching apparatus of the target tap is switched to the switched-on status. Only after the switched-on status of the switching apparatus for the target tap is sufficiently achieved, the switching apparatus of the previous tap may be switched to the switched-off status. A time period, where two switching apparatuses have the switched-on status at the same time, may be limited to a few milliseconds or less. This may improve commutating and alternating current of the primary winding between the taps.

The electrolyzing plant has a voltage sensor that is configured to sense the value of the alternating voltage at the point of connection. The voltage sensor provides a respective voltage sensor in response to sensing and submits the voltage signal to a control apparatus of the electrolyzing plant. The control apparatus may be provided only for controlling the on-load-tap-changer and its switching apparatuses. However, the control apparatus may also be provided for controlling of several other devices and apparatuses of the electrolyzing plant, especially the at least one electric converter, and/or the like.

The control apparatus may compare the voltage signal with at least one predetermined reference value. The predetermined reference value may be a specific value allocated to a rated alternating voltage of the electric power network. However, the predetermined reference value may be not only a single fixed value, but it may also be formed by a tolerance band, which may have an upper and a lower value. Especially, the predetermined reference value may comprise plural single values, which may define voltage bands that can be allocated to each of the taps. So, it may be possible that comparing of the control apparatus may directly result in identifying a specific tap to be used. The control apparatus may then compare this identified target tap with the tap actually activated. If the target tap corresponds to the actually activated tap, no further action needs to be necessary so that the control apparatus need not provide a respective control signal to the on-load-tap-changer. However, if this comparison leads to a negative result, the control apparatus provides a respective control signal to the on-load-tap-changer in order to cause the on-load-tap-changer switching the switching apparatus of the target tap into the switched-on status, and, at the same time, to switch the switching apparatus of the actually activated tap into the switch-off status. This operation does allow changing between taps without considering intermediate taps. So, a very fast reaction can be achieved.

The control apparatus can be provided as a hardware circuitry and/or a programmable computer. However, the control apparatus may be individually provided for controlling the on-load-tap-changer only. The control apparatus may be integral with the on-load-tap-changer. This may enhance the reaction velocity with regard to variations of the value of the voltage signal.

Generally, the alternating voltage of the electric power network may be a single phase voltage. However, the alternating voltage of the electric power network may also have more than one single phase, for example, three phases or more. In this regard, the point of connection as well as the transformer as well as the converter may be adapted correspondingly. Insofar, the transformer may be adapted to the number of phases of the electric power network. Insofar, the transformer may have a respective number of primary and secondary phase windings. The on-load-tap-changer and the switching apparatus may be adapted correspondingly so that switching between taps may be provided for each of the phases, if the alternating voltage of the electric power network has more than one single phase.

Summarized, the invention allows a FRT, especially a HVRT with a very fast reaction time so that the electric power network can be better supported. This can be achieved by the fast reaction of the electrolyzing plant on high voltage events and the like. In this regard, it should be considered that a shutdown of the electrolyzing plant during a high voltage event of the electric power network could increase the high voltage problem on the electric power network site. Therefore, the invention supports avoiding disconnection of the electrolyzing plant, on the one hand, and provides stabilization capability for the electric power network, on the other hand, because power consumption of the electrolyzing plant can be maintained in many events.

According to an exemplary embodiment, it is proposed that, dependent on comparing, the control apparatus determines a specific one of the switching apparatuses to be switched in the switched-on status, wherein the other switching apparatuses are determined to be switched in the switched-off status. Insofar, the control apparatus may provide a control signal for the on-load-tap-changer such that this control signal may comprise information regarding the switching statuses of each of the switching apparatuses. Especially, it may be possible, that the control apparatus controls directly the switching apparatuses of the on-load-tap-changer. The on-load-tap-changer, in this regard, may be at least partially a mechanical member that may be connected with all of the taps of the primary winding of the transformer and may be in communication with the control apparatus.

According to another exemplary embodiment, it is proposed that the control apparatus determines a slew rate of the value of the voltage signal, and determines the switching apparatus to be switched in the switched-on status and the switching apparatuses to be switched in the switched-off status dependent on the slew rate. In one embodiment, it may be provided that, if dU/dt or the slew rate, respectively, is very high, which means that the transient process is still actively ongoing, tap positions should not change. Only after du/dt becomes low, which means that the transient event is almost finished, a new steady state is almost reached. Then, it is preferred to change tap position according to the described process. Especially, when the overvoltage event is detected according to the applied limits, the control apparatus for the on-load-tap-changer may then detect a new steady state operation condition by calculation of the slew rate, and by processing the data received from a high sampling voltage measurement system. If the slew rate is lower than specified limit, the command for triggering of the defined tap position may be sent. A proper tap position may be selected by additional a comparator. By use of the comparator to compare the measured voltage level at the POC and knowing the design voltage table of the on-load-tap-changer, it may be possible to determine how many taps are needed to compensate the overvoltage. The slew rate may be considered additionally to the value of the voltage signal. However, the control signal may be provided by the control apparatus only dependent on the slew rate. Insofar, it is possible to consider the slew rate of the voltage signal and, in turn, of the alternating voltage, in order to determine the tap of the primary winding to be activated. Considering especially IGBT-based converters, additional control device can be implemented in order to improve the accuracy of the overvoltage detection. A measurement on DC side can be used to identify that a flyback-diode of one or more IGBT's is in conducting mode during the overvoltage event. Insofar, dU/dt measurements on DC side in combination with IGBT current measurement can be included. Also, if dU/dt is positive and the IGBT current is null, this may mean that the diodes are conducting the entire phase current. The combination of the DC side measurement, such as dU/dt and IGBT current, can potentially support the AC side in identifying a high AC voltage condition, especially, when noise or flicker may be present on the grid. In an alternative specific embodiment, it may be provided that a high slew rate may cause the on-load-tap-changer to activate a tap by leaving out one or more intermediate taps, wherein a small slew rate may result in activating an adjacent tap. In this regard, it is possible to achieve a mated reaction on the voltage variation.

Moreover, it is proposed that the at least one predetermined reference value comprises an overvoltage reference value and/or an under-voltage reference value, when the electrolyzing plant is allowed shutting-down if the voltage signal is higher than the overvoltage reference value and/or if the voltage signal is smaller than the under-voltage reference value. In this regard, a reliable operation of the electrolyzing plant can be maintained. Especially, dangerous events in the electrolyzing plant can be avoided.

According to another exemplary embodiment, it is proposed that the control apparatus compares the voltage signal with a predetermined rated value corresponding to the alternating voltage at the point of connection, and determines the switching statuses of the switching apparatuses dependent on comparing such that the on-load-tap-changer provides a step-up operation when the voltage signal exceeds the predetermined rated value and/or provides a step-down operation when the voltage signal falls below the predetermined rated value. In this regard, a simple and fast control of the on-load-tap-changer can be achieved. It is, for example, possible that several step-ups or step-downs can be provided consecutively. This may result in a very simple design of the on-load-tap-changer and the control apparatus. This embodiment may also be considered when the voltage sensor may be used for sensing the secondary alternating voltage instead of the alternating voltage at the point of connection. In this embodiment, the on-load-tap-changer may have a tap changing apparatus, which is configured to provide the step-up and/or the step-down operation. The tap changing apparatus may be controlled by the control signal of the control apparatus.

Moreover, in a specific embodiment, it is proposed that a specific switching apparatus, which is in the switched-on status, is switched-off only after another one of the switching apparatuses is switched to the switched-on status. This may enhance a commutating process of a current of the primary winding between the taps. The overlap, where the two switching apparatuses are in the switched-on status at the same time, may be limited by a specific time period, which may be in a range of a few milliseconds or less.

According to another exemplary embodiment, it is proposed that any of the switching apparatuses is switched from the switched-on status to the switched-off status if an electric current through this switching apparatus reaches zero. This may help to reduce switching losses and may also support in avoiding electromagnetic interferences. If the solid-state switching element is provided by a thyristor, this operation may be achieved by omit a respective firing signal for the thyristor. If the solid-state switching element is provided by a transistor, it may be preferred to provide the respective transistor switching signal dependent on a current flow through the transistor.

Moreover, it is proposed that the on-load-tap-changer has an inrush current limiting member configured to limit an inrush current of the solid-state switching element if the solid-state switching element is switched from the switched-off status to the switched-on status. The inrush current limiting member may comprise an electric resistor, an inductor, combinations thereof and/or the like. The inrush current limiting member may help to avoid a very high increase of current, which may flow through the solid-state switching element when its switching status is changed from the switched-off status to the switched-on status. The inrush current limiting member may be included in each of the switching apparatuses. However, dependent on the design of the transformer and the on-load-tap-changer, not every switching apparatus needs to have an inrush current limiting member.

According to another exemplary embodiment, it is proposed that the transformer has a housing configured to be subjected to a cooling fluid, wherein the housing is configured to include the on-load-tap-changer. This Embodiment allows achieving a simple construction because the on-load-tap-changer can be integrated into the transformer design. This further reduces expense with regard to connecting the on-load-tap-changer with the taps of the primary winding.

Moreover, it is proposed that the housing is configured to subject the switching apparatuses of the on-load-tap-changer to the cooling fluid. This embodiment allows using the cooling fluid of the transformer at the same time for cooling purposes for the switching apparatuses, especially, their solid-state switching elements. A separate cooling device for cooling of the on-load-tap-changer and its switching devices can be reduced or avoided. Moreover, it can be considered that the cooling fluid may have insulation characteristics so that respective insulation characteristics can be provided at the on-load-tap-changer, too.

The cooling fluid can be a respective oil, a gas, such as air, carbon dioxide, combinations thereof, and/or the like.

For use cases or use situations which may appear in a method according to the invention and which are not explicitly described herein, it may be provided that, in accordance with the method, an error message and/or a prompt for user feedback is output and/or a default setting and/or a predetermined initial state is set. Especially, in applications or situations which might be possible but which are not specified specifically, it may be provided that a failure signal and/or a request for inputting a user confirmation can be output and/or a standard configuration and/or a predefined initial status can be suspended.

Advantages and effects of the inventive method also apply to the inventive electrolyzing plant and vice versa. Therefore, method features may also be expressed as apparatus features and vice versa.

The teaching of the present invention can be readily understood and at least some additional specific details will appear by considering the following detailed description of some exemplary embodiments in conjunction with the accompanying drawings. In the drawings, same reference characters correspond to same components and functions. In the drawings, it is shown:
- FIG 1: a schematic block diagram showing an exemplary electrolyzing plant,
- FIG 2: a schematic electric circuitry of a transformer of the electrolyzing plant according to FIG 1 having an on-load-tap-changer,
- FIG 3: a schematic electric circuitry of the transformer of FIG 2 showing the on-load-tap-changer with switching apparatuses for each of the taps of a primary winding of the transformer in first switching statuses,
- FIG 4: a schematic electric circuitry as FIG 3, wherein the switching apparatuses have second switching statuses,
- FIG 5: a schematic electric circuitry as FIG 3, wherein the switching apparatuses have third switching statuses,
- FIG 6: a schematic diagram showing electric characteristics of a cell stack of the electrolyzing plant of FIG 1,
- FIG 7: a schematic diagram showing a time-dependent value of the alternating voltage of an electric power network supplying the electrolyzing plant of FIG 1 measured at a point of connection with a voltage sensor of the electrolyzing plant,
- FIG 8: a schematic diagram showing a time-dependent value of a DC electrolyzing voltage provided by a converter of the electrolyzing plant of FIG 1 in a time range of FIG 7 with a conventional on-load-tap-changer,
- FIG 9: a schematic diagram showing a time-dependent value of a DC electrolyzing current provided by the converter in the time range of FIG 7 with a conventional on-load-tap-changer,
- FIG 10: a schematic diagram as FIG 8 with an inventive on-load-tap-changer,
- FIG 11: a schematic diagram as FIG 9 with the inventive on-load-tap-changer, and
- FIG 12: a schematic diagram showing a network requirement defining a condition for shutdown of the electrolyzing plant of FIG 1.

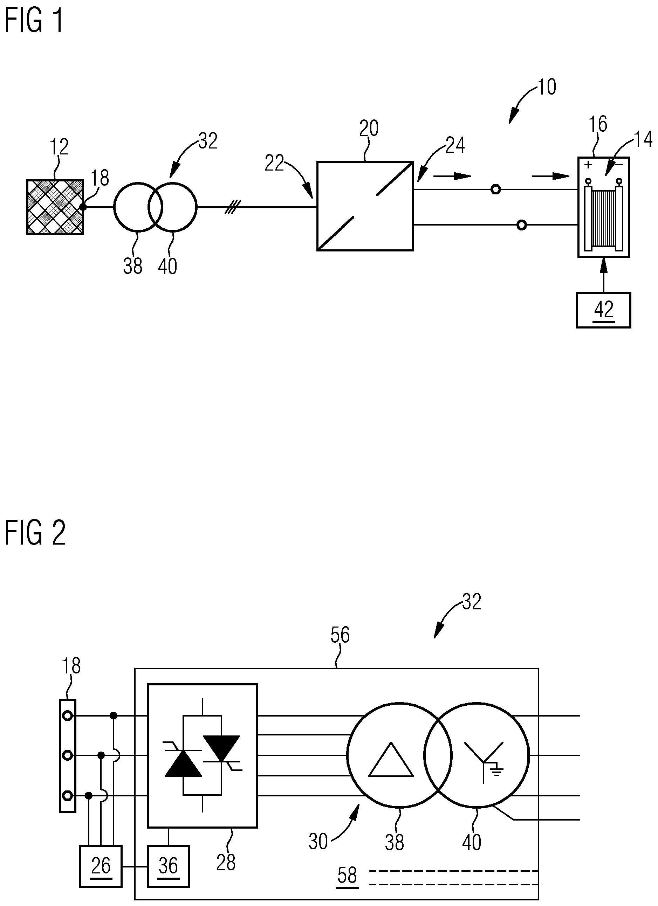

FIG 1 shows a schematic block diagram showing an electrolyzing plant 10. The electrolyzing plant 10 has plural electrolyzing cells 14, which are arranged in a stack 16. The electrolyzing cells 14 are configured to electrolyze water by providing an electrolyzing process. The electrolyzing process is performed by the electrolyzing cells 14 in response to being subjected to a DC electrolyzing power.

The electrolyzing plant 10 also has a point of connection 18, which is configured to be connected with an electric power network 12, in order to supply the electrolyzing plant 10 with electric power from the electric power network 12. The electric power network 12 deploys an alternating voltage having a rated frequency. The alternating voltage is a three-phase voltage in the present embodiment. In the present embodiment, the rated frequency has a value of about 50 Hz. In alternative embodiments, the rated frequency may have a value of about 60 Hz, about 400 Hz, or the like.

The electrolyzing plant 10 further comprises an electric converter 20 having an AC side 22 electrically connected with the point of connection 18, in order to receive the electric power from the electric power network 12. Moreover, the converter 20 has a DC side 24 connected with the electrolyzing cells 14, wherein the DC side 24 is configured to provide the electrolyzing cells 14 with the DC electrolyzing power in response to the AC side 22 receiving the electric power. At the DC side 24, the electric converter 20 provides a DC electrolyzing voltage and a DC electrolyzing current. The DC electrolyzing voltage is selected such that the stack 16 of the electrolyzing cells 14 can be subjected to the electrolyzing voltage so that each of its electrolyzing cells 14 is subjected to a respective portion of the DC electrolyzing voltage, in order to provide a proper electrolyzing process. In the stack 16, the electrolyzing cells 14 are electrically arranged in series. Therefore, in this embodiment, each of the electrolyzing cells 14 is subjected to the same DC electrolyzing current.

Moreover, the electrolyzing plant 10 has an operating device 42, which is configured to supply the electrolyzing cells 14 with an agent to be electrolyzed, which is in the present embodiment formed by water. Moreover, the operating device 42 is configured to discharge the products produced in response to electrolyzing the water, which is in the present embodiment hydrogen and oxygen. The operating device 42 may comprise respective piping, in order to allow supplying and discharging. The operating device 42 may further comprise heating and/or cooling apparatuses, additional sensors and/or the like, in order to provide a proper operation of the stack 16 of the electrolyzing cells 14.

The electrolyzing plant 10 has a transformer 32 establishing the connection between the AC side 22 of the electric converter 20 and the point of connection 18. In this regard, the transformer 32 has a primary winding 38 and a secondary winding 40. The windings 38, 40 are designed as a three-phase winding, in order to be subjected to a three-phase alternating voltage of the electric power network 12. The primary winding 38 is connected with the point of connection 18. The secondary winding 40 is connected with the AC side 22 of the electric converter 20. So, the electric converter 20 can be subjected to a transformed voltage, which is adapted to a rated configuration of the electric converter 20.

During a current electrolyzing process, the electric converter 20 receives electric power from the electric power network 12 via the point of connection 18 and the transformer 32. The electric converter 20 converts the electric power to an electric power deploying the DC electrolyzing voltage and the DC electrolyzing current. This is provided at the DC side 24 of the electric converter 20. So, the electrolyzing cells 14 of the stack 16 can be supplied with electric energy, in order to allow the electrolyzing process.

In the present embodiment, the electric converter 20 has thyristors for providing a rectifying operation in order to convert the electric power. As well known to those scaled in the art, the thyristors are controlled by firing impulses. The firing impulses are allocated to a current phase situation of the alternating voltage received at the AC side 22.

FIG 2 shows a schematic electric circuitry of the transformer 32 of the electrolyzing plant 10, according to FIG 1 in a more detailed way. As can be seen from FIG 2, the transformer 32 comprises a housing 56, which contains a cooling oil 58 as a cooling fluid. As can be seen from FIG 2, the primary winding 38 of the transformer 32 has taps 30, which are connected with an on-load-tab-changer 28, which is also arranged inside of the housing 56. The on-load-tab-changer 28, especially a switching status of the on-load-tab-changer 28, is controlled by a control apparatus 36. The on-load-tab-changer 28 provides electrical connection between the taps 30 and the point of connection 18 depending on its switching status.

For the purpose of controlling the on-load-tab-changer 28, a voltage sensor 26 is provided, sensing a value of the alternating voltage of the electric power network 12 at the point of connection 18. The voltage sensor 26 provides a voltage signal in response to sensing and submits the voltage signal to the control apparatus 36. The control apparatus 36 is configured to compare the voltage signal with a predetermined reference value and controls the on-load-tab-changer 28 dependent on comparing.

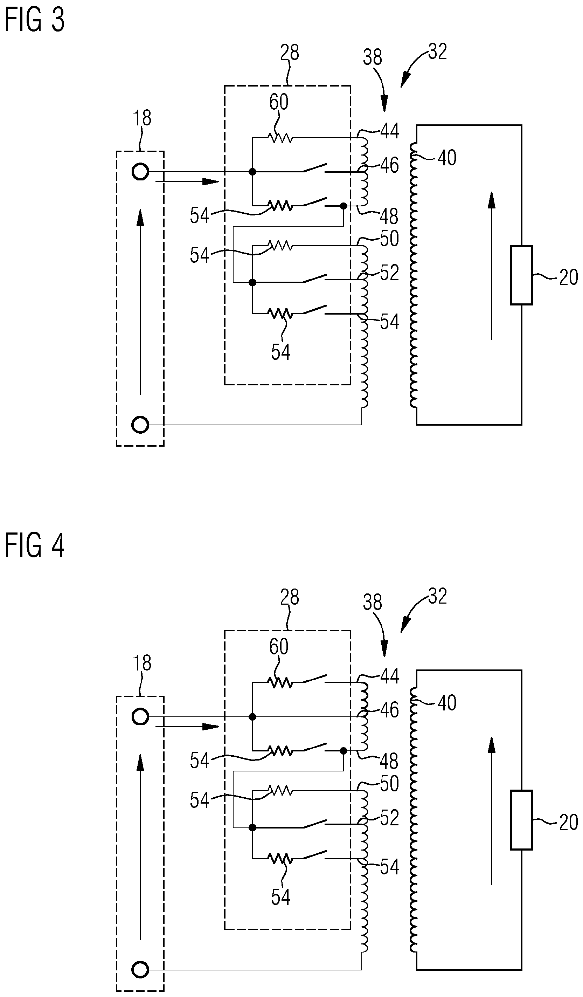

FIG 3 shows a schematic electric circuitry of the transformer 32 of FIG 2 in more detail. As can be seen from FIG 3, the on-load-tab-changer 28 has switching apparatuses S1, S2, S3, S4, S5, S6, which are connected at one of their ends with a respective tap 44, 46, 48, 50, 52, 54 of the primary winding 38. In this regard, the taps 44, 46, 48, 50, 52, 54 replace taps 30 in FIG 2. On the other hand, the switching apparatuses S1, S2, S3, S4, S5, S6 allow electric connection with the point of connection 18 depending on their switching statuses. In the present embodiment, the switching apparatuses S1, S2, S3, S4, S5, S6 are provided by two thyristors connected in antiparallel manner. The switching apparatus S1, S2, S3, S4, S5, S6 are controlled with regard to their individual switching statuses by the control apparatus 36.

As can be seen from FIG 3, a first switching status of the on-load-tab-changer 28 is provided by the switching apparatuses S1 and S4 being in the switched-on status. The other switching apparatus S2, S3, S5, S6 are in the switched-off status.

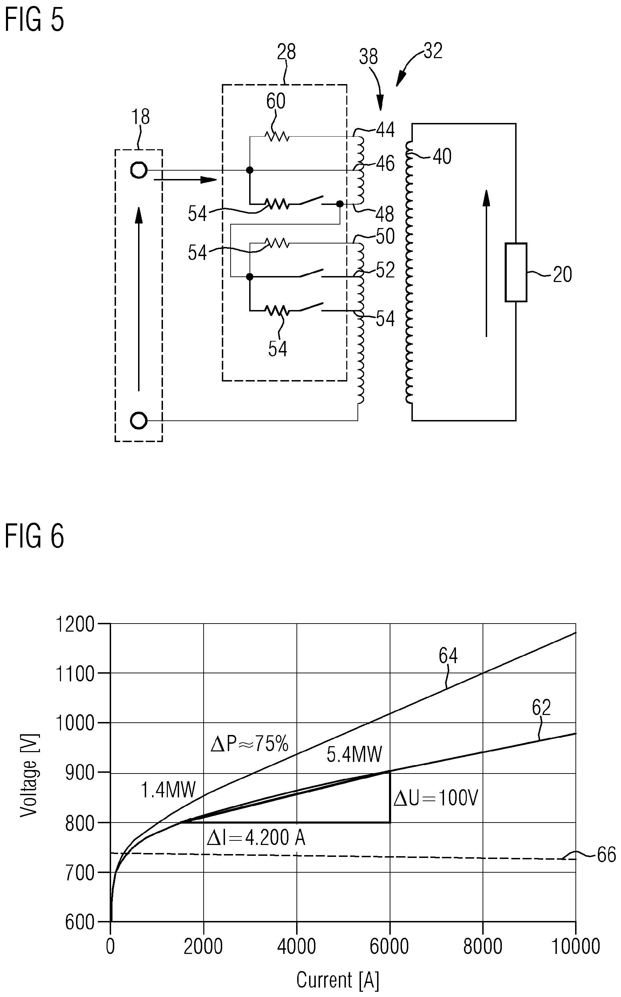

The next FIG 4 and 5 relate to a change of the switching status of the on-load-tab-changer 28. As can be seen from FIG 4, the switching status of the switching apparatus S1 is changed from the switched-on status as shown in FIG 3 to the switched-off status as shown in FIG 4. At the same time, the switching status of the switching apparatus S2 changes from the switched-off status as shown in FIG 3 to the switched-on status as shown in FIG 4. The other switching apparatuses S3, S4, S5, S6 maintain their switching statuses.

FIG. 5 shows an intermediate status, which is provided between the statuses as shown by FIG. 3 and 4. As can be seen from FIG. 5, the switching status of the switching apparatus S1 is firstly maintained, wherein the switching apparatus S2 is switched to the switched-on status. Only after the switching apparatus S2 has arrived at the switched-on status, the switching apparatus S1 changes its switching status from the switched-on status to the switched-off status. In this regard, the switching apparatuses S1 and S2 are for a short time period in the same switching status, namely, the switched-on status.

One challenge for operating the electrolyzing plant 10 is that a sudden high-voltage event in the electric power network 12 may affect the operation of the electrolyzing plant 10. This is shown in a schematic diagram according to FIG 6 showing electric characteristics of the cell stack 16 of the electrolyzing plant 10 according to FIG 1. In the diagram, an abscissa is allocated to the DC electrolyzing current, wherein an ordinate is allocated to the DC electrolyzing voltage. A graph 62 shows the relationship at a begin-of-life condition of the electrolyzing cells 14, whereas a graph 64 shows the relationship at an end-of-life condition of the electrolyzing cells 14. As can be seen from FIG 6, a small variation of the DC electrolyzing voltage may cause a respective high variation of the DC electrolyzing current. A graph 66 shows a threshold for establishing the electrolyzing process. The electrolyzing process usually takes only place above the graph 66.

Due to the flat relation between the DC electrolyzing voltage and the DC electrolyzing current, a small change of the DC electrolyzing voltage leads to a dramatic change in the DC electrolyzing current. Therefore, a high voltage event on the alternating voltage of the electric power network 12 may usually cause a shutdown of the electrolyzing plant 10. However, from point of view of the electric power network 12, this is very disadvantageous because it may substantially increase the high voltage event in the electric power network 12. In this regard, it should be also noted that such undesired high voltage events usually appear for short time periods only.

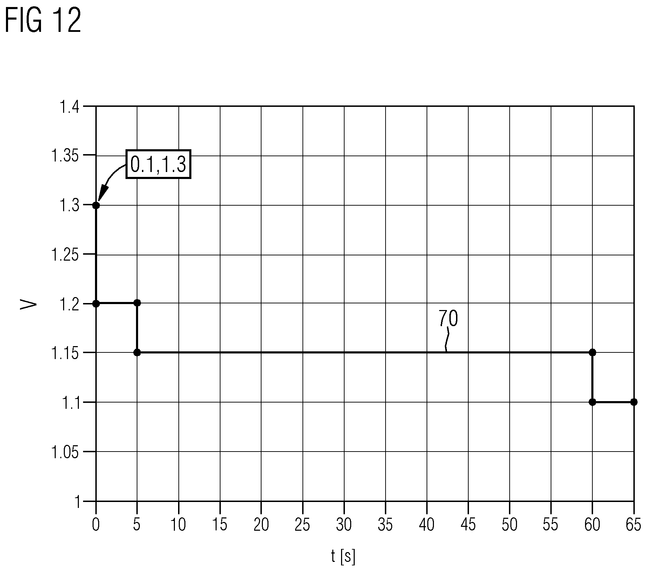

In this regard, a grid provider of the electric power network 12 defines conditions, where a consumer of electric power, such as the electrolyzing plant 10, is allowed shutting-down energy consumption during an overvoltage event. In this regard, FIG 12 shows a schematic diagram showing a network requirement defining a condition for shutdown of the electrolyzing plant 10 of FIG 1. In FIG 12, an abscissa is allocated to the time, whereas an ordinate is allocated to a relative voltage amendment of the alternating voltage of the electric power network 12. A graph 70 indicates when the electrolyzing plant 10 is allowed shutting-down. Therefore, the graph 70 indicates the limit.

As can be seen from a FIG 12, as far as the variation of the value of the alternating voltage is below the value of the graph 70, the electrolyzing plant 10 is requested to maintain power consumption. Only if the variation of the value of the alternating voltage is above the graph 70, shutdown of the electrolyzing plant 10 is allowed. Moreover, it can be seen from FIG 12, that the value depends on the time range for which the variation of the value of the alternating voltage lasts. Therefore, from electrolyzing plant 10 view, it is necessary to provide a fast reaction if an overvoltage event appears and the electrolyzing plant 10 is not allowed being shutdown.

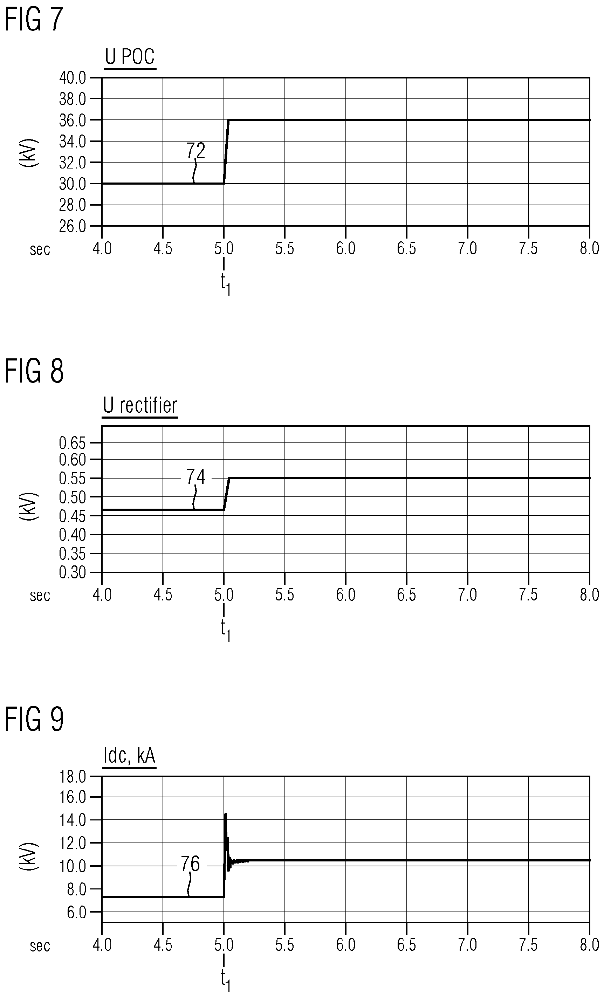

FIG 7 through 9 show an overvoltage event that suddenly appears. In the FIG 7 through 9, an abscissa is allocated to the time. All three schematic diagrams have the same time axis. In FIG 7, an ordinate is allocated to a value of the alternating voltage of the electric power network 12, namely an rms value. As can be seen from a FIG 7, the value of the alternating voltage before the high voltage event is about 30 kV. At an instant of time t1, the value jumps to about 36 kV. This is indicated by a graph 72 in FIG 7.

FIG 8 shows a schematic diagram having the same time axis as the diagram of FIG 7. An ordinate is allocated to a DC electrolyzing voltage. In FIG 8, the value of the DC electrolyzing voltage is indicated by a graph 74. As can be seen from FIG 8, up to the time t1, the DC electrolyzing voltage has a value of about 0.47 kV. At the time t1, the DC electrolyzing voltage jumps to a value of about 0.55 kV. The reaction on the electrolyzing process is indicated by the schematic diagram according to FIG 9. In FIG 9, the abscissa corresponds to the abscissa of FIG 7 and 8. An ordinate of the diagram of FIG 9 corresponds to the DC electrolyzing current. Considering the characteristics as detailed above according to FIG 6, the DC electrolyzing current before the time t1 is about 0.75 kA. At the time t1, the DC electrolyzing current jumps to a very high value of about 15 kA and falls back to a value of about 10.5 kA. As can be seen from FIG 7 through 9, the stack 16 will react very sensitive with regard to an increasing DC electrolyzing voltage. This can cause dangerous situations in the electrolyzing plant 10 which is why such an event shall be avoided.

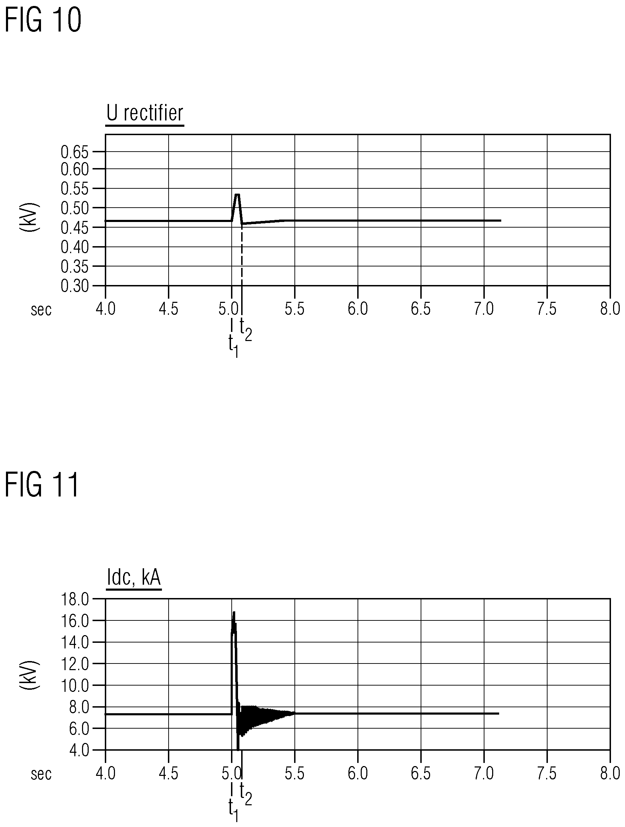

According to the invention, the on-load-tab-changer 28 is designed to provide a very fast reaction. The use of thyristors as switching apparatuses S1 through S6, allows providing a reaction in a time range of about several 10 ms, for example, of about less than 20 ms. FIG 10 and 11 show the result when the inventive on-load-tab-changer 28 reacts on the high voltage event according to FIG 7.

In this regard, the result is shown by FIG 10 and 11, wherein FIG 10 shows a schematic diagram as FIG 8 with the use of the inventive on-load-tab-changer 28 and FIG 11 shows a schematic diagram as FIG 9 with the inventive on-load-tab-changer 28. As can be seen from FIG 10, the fast reaction of the on-load-tab-changer 28 by use of the switching apparatuses S1 through S6, allows reducing the influence on the DC electrolyzing voltage to a small peak for a time range of about 10 ms. The peak has a peak voltage of about 0,54 kV. At an instant of time t2, the DC electrolyzing voltage reaches a value corresponding to the value before the instant of time t1.

FIG 11 shows a schematic diagram as FIG 9 with the inventive on-load-tab-changer 28 considering the conditions according to FIG 10. As can be seen from FIG 11, up to the instant of time t1, the DC electrolyzing current has a value of about 7.5 kA. Beginning with an instant of time t1, the DC electrolyzing current rises rapidly up to a value of about 16 kA and up to the instant of time t2, falls down to reach again the value before the instant of time t1. Therefore, the use of the on-load-tab-changer 28 results in reducing the effects caused by an high voltage event at the point of connection 18 such that only an impulse between the instant of time t1 and the instant of time t2 appears at the stack 16. This short pulse can be handled by the electrolyzing cells 14 without causing substantial dangerous situations. Therefore, the inventive concept allows supporting the electric power network 12 during a high voltage event.

The embodiments described above shall be regarded only for further explanation of the invention and shall not be regarded as limiting the scope.

## Claims

1. A method of controlling an electrolyzing plant (10) having plural electrolyzing cells (14), especially configured to electrolyze water by providing an electrolyzing process, wherein the electrolyzing cells (14) perform the electrolyzing process in response to being subjected to a DC electrolyzing power, wherein the electrolyzing plant (10) is supplied with electric power received via a point of connection (18) of the electrolyzing plant (10) connected with an electric power network (12), wherein the electric power network (12) deploys an alternating voltage for providing the electric power, wherein a primary winding (38) of a transformer (32) of the electrolyzing plant (10) is connected with the point of connection (18), in order to be subjected to the alternating voltage, wherein a secondary winding (40) of the transformer (32) provides an alternating secondary voltage, wherein an AC side (22) of at least one electric converter (20) of the electrolyzing plant (10) is electrically connected with the secondary winding (40) in order to receive the electric power, and a DC side (24) of at least one electric converter (20) provides the DC electrolyzing power in response to the AC side (22) receiving the electric power, wherein the primary winding (38) has at least two taps (30) connected with an on-load-tap-changer (28) of the transformer (32), wherein a voltage sensor (26) of the electrolyzing plant (10) senses a value of the alternating voltage at the point of connection (18), wherein the voltage sensor (26) provides a voltage signal in response to sensing and submits the voltage signal to a control apparatus (36) of the electrolyzing plant (10), wherein the control apparatus (36) compares the voltage signal with at least one predetermined reference value and controls the on-load-tap-changer (28) dependent on comparing,
**characterized in that**
for each of the taps (30), the on-load-tap-changer (28) has an individual switching apparatus (S1, S2, S3, S4, S5, S6), wherein each of the switching apparatuses (S1, S2, S3, S4, S5, S6) is configured to connect exactly one of the taps (30) with the point of connection depending on a switching status of the respective individual switching apparatus (S1, S2, S3, S4, S5, S6), wherein the switching statuses of the switching apparatuses (S1, S2, S3, S4, S5, S6) are controlled dependent on comparing, wherein each of the switching apparatuses (S1, S2, S3, S4, S5, S6) comprise at least one solid-state switching element.

2. The method according to claim 1, **characterized in that**, dependent on comparing, the control apparatus (36) determines a specific one of the switching apparatuses (S1, S2, S3, S4, S5, S6) to be switched in the switched-on status, wherein the other switching apparatuses (S1, S2, S3, S4, S5, S6) are determined to be switched in the switched-off status.

3. The method according to any one of the preceding claims, **characterized in that** the control apparatus (36) determines a slew rate of the voltage signal, and determines the switching apparatus (S1, S2, S3, S4, S5, S6) to be switched in the switched-on status and the switching apparatuses (S1, S2, S3, S4, S5, S6) to be switched in the switched-off status dependent on the slew rate.

4. The method according to any one of the preceding claims, **characterized in that** the at least one predetermined reference value comprises an overvoltage reference value and/or an undervoltage reference value, wherein the electrolyzing plant (10) is shut-down if the voltage signal is higher than the overvoltage reference value and/or if the voltage signal is smaller than the undervoltage reference value.

5. The method according to any one of the preceding claims, **characterized in that** the control apparatus (36) compares the voltage signal with a predetermined rated value corresponding to the alternating voltage at the point of connection (18), and determines the switching statuses of the switching apparatuses (S1, S2, S3, S4, S5, S6) dependent on comparing such that the on-load-tap-changer (28) provides a step-up operation when the voltage signal exceeds the predetermined rated value and/or provides a step-down operation when the voltage signal falls below the predetermined rated value.

6. The method according to any one of the preceding claims, **characterized in that** a specific switching apparatus (S1, S2, S3, S4, S5, S6), which is in the switched-on status, is switched-off only after another one of the switching apparatuses (S1, S2, S3, S4, S5, S6) is switched to the switched-on.

7. The method according to any one of the preceding claims, **characterized in that** any of the switching apparatuses (S1, S2, S3, S4, S5, S6) is switched from the switched-off status to the switched-on status if a voltage at this switching apparatus (S1, S2, S3, S4, S5, S6) reaches zero.

8. The method according to any one of the preceding claims, **characterized in that** any of the switching apparatuses (S1, S2, S3, S4, S5, S6) is switched from the switched-on status to the switched-off status if an electric current through this switching apparatus (S1, S2, S3, S4, S5, S6) reaches zero.

9. An electrolyzing plant (10) having
- plural electrolyzing cells (14), especially configured to electrolyze water by providing an electrolyzing process, wherein the electrolyzing cells (14) perform the electrolyzing process in response to being subjected to a DC electrolyzing power,
- a point of connection (18) configured to be connected with an electric power network (12), wherein the electric power network (12) deploys an alternating voltage for providing the electric power, in order to supply the electrolyzing plant (10) with electric power received via a point of connection (18),
- a transformer (32) having a primary winding (38) connected with the point of connection (18), in order to be subjected to the alternating voltage, wherein the primary winding (38) has at least two taps (30), and a secondary winding (40) providing an alternating secondary voltage,
- at least one electric converter (20) having an AC side (22) connected with the secondary winding (40) in order to receive the electric power, and a DC side (24) providing the DC electrolyzing power in response to the AC side (22) receiving the electric power,
- an on-load-tap-changer (28) connected with the at least two taps (30),
- voltage sensor (26) configured to sense a value of the alternating voltage at the point of connection (18), wherein the voltage sensor (26) is configured to provide a voltage signal in response to sensing,
- a control apparatus (36) configured to compare the voltage signal submitted by the voltage sensor (26) with at least one predetermined reference value and to control the on-load-tap-changer (28) dependent on comparing,
**characterized in that**,
for each of the taps (30), the on-load-tap-changer (28) has an individual switching apparatus (S1, S2, S3, S4, S5, S6), wherein each of the switching apparatuses (S1, S2, S3, S4, S5, S6) is configured to connect exactly one of the taps (30) with the point of connection (18) depending on a switching status of the respective individual switching apparatus (S1, S2, S3, S4, S5, S6), wherein the control apparatus (36) is configured to control the switching statuses of the switching apparatuses (S1, S2, S3, S4, S5, S6) dependent on comparing, wherein each of the switching apparatuses (S1, S2, S3, S4, S5, S6) comprise at least one solid-state switching element.

10. The electrolyzing plant according to claim 9, **characterized in that** the on-load-tap-changer (28) has an inrush current limiting member (60) configured to limit an inrush current of the solid-state switching element if the solid-state switching element is switched from the switched-off status to the switched-on status.

11. The electrolyzing plant according to claim 9 or 10, **characterized in that** the transformer (32) has a housing (56) configured to be subjected to a cooling fluid (58), wherein the housing (56) is configured to include the on-load-tap-changer (28).

12. The electrolyzing plant according to claim 11, **characterized in that** the housing (56) is configured to subject the switching apparatuses (S1, S2, S3, S4, S5, S6) of the on-load-tap-changer (28) to the cooling fluid (58).
